# EUROPÄISCHE PATENTSCHRIFT

(11) **EP 3 043 975 B1**
(45) Veröffentlichungstag und Bekanntmachung des Hinweises auf die Patenterteilung: **14.08.2019**
(21) Anmeldenummer: 14761296.4
(22) Anmeldetag: 25.08.2014
(51) Int. Cl.: B29B 11/16

(54) **VERFAHREN ZUR HERSTELLUNG VON FASER-PREFORMS FÜR EIN FASERVERBUNDBAUTEIL MIT LOKAL ANGEPASSTEN MECHANISCHEN EIGENSCHAFTEN**
METHOD FOR PRODUCING FIBRE PREFORMS FOR A COMPOSITE FIBRE COMPONENT HAVING LOCALLY TAILORED MECHANICAL PROPERTIES
PROCÉDÉ DE FABRICATION DE PRÉFORMES EN FIBRES POUR UN ÉLÉMENT COMPOSITE RENFORCÉ PAR FIBRES PRÉSENTANT DES PROPRIÉTÉS MÉCANIQUES LOCALEMENT ADAPTÉES

(30) Priorität: 09.09.2013 DE 102013218006
(43) Veröffentlichungstag der Anmeldung: 20.07.2016
(73) Patentinhaber: Bayerische Motoren Werke Aktiengesellschaft, 80809 München (DE)
(72) Erfinder: BECHERER, David, 80992 München (DE); MIADOWITZ, Thomas, 84030 Ergolding (DE); RAPP, Florian, 81539 München (DE); VEIHELMANN, Bernd, 84034 Landshut (DE)
(86) Internationale Anmeldenummer: PCT/EP2014/067982
(87) Internationale Veröffentlichungsnummer: WO 2015/032644

(56) Entgegenhaltungen:
- WO-A1-90/15712
- WO-A1-95/30532
- DE-B3-102008 052 671
- FR-A- 1 200 649
- FR-A1- 2 954 210
- US-A- 5 979 288
- CAMPBELL F C ED - CAMPBELL FLAKE C: "Manufacturing processes for advanced composites", 1 January 2004 (2004-01-01), MANUFACTURING PROCESSES FOR ADVANCED COMPOSITES, ELSEVIER ADVANCED TECHNOLOGY, OXFORD, GB, PAGE(S) 304 - 356, XP002580602, ISBN: 978-1-85617-415-2

## Beschreibung

Die Erfindung betrifft ein Verfahren zur Herstellung eines Faser-Preforms für ein Faserverbundbauteil, insbesondere eines Hohlprofils, wobei eine erste Faserstruktur in einem Flechtprozess geflochten und eine zweite Faserstruktur in einem Wickelprozess gewickelt wird.

Aus dem Stand der Technik sind Flecht- und Umflechtprozesse für die Herstellung von Biaxial- und Triaxial-Geflechten zur Erzeugung von Faser-Preforms unter Verwendung von verschiedenen Faserarten, insbesondere Glasfasern, Kohlenstofffasern, Aramidfasern sowie Kombinationen daraus, bekannt. Solche und ähnliche Verfahren sind beispielsweise aus den Offenbarungen der Schriften US 5 979 288 A, WO 95/30532 A1, FR 1 200 649 A, FR 2 954 210 A1, WO 90/15712 A1 und dem Dokument DE 10 2008 052 671 B3 bekannt. Der Flechtprozess ist besonders günstig zur Ausbildung der 0°-Orientierung, d.h. der Orientierung entlang der Längsachse des zu fertigenden Bauteils, auch bei komplexen Bauteilgeometrien, da ein Abrutschen bzw. ein Versatz der Fasern durch die Queranbindung mit Flechtfasern reduziert wird. Auch das Wickeln von Fasern zur Erzeugung von Bauteilen ist grundsätzlich aus dem Stand der Technik bekannt. Der Wickelprozess wird jedoch hauptsächlich für rotationssymmetrische Bauteile mit einfachen Bauteilgeometrien eingesetzt, da durch das Wickeln gegenüber einem Flechtprozess sehr gut große Winkel gegenüber der 0°-Orientierung, d.h. insbesondere in Umfangsrichtung, sehr gut realisierbar sind. Die 0°-Faserorientierung ist durch den Wickelprozess alleine kaum oder nur sehr eingeschränkt erzeugbar. Die Flechtverfahren unterliegen ebenfalls Einschränkungen hinsichtlich der Variabilität, da speziell bei triaxialen Aufbauten große Winkel gegenüber der 0°-Orientierung nur mit großen Querschnitten umsetzbar sind. Zudem sinkt die Produktionsgeschwindigkeit im Flechtprozess bei großen Winkeln erheblich. Auch das verwendbare Fasermaterial ist durch die Spulengröße für die Flechtfäden und die Ondulation der Fasern beschränkt. Es müssten Fasern mit geringer Fadenfeinheit eingesetzt werden, wodurch die Kosten, insbesondere beim Einsatz von Kohlenstofffasern, deutlich erhöht werden.

Vor diesem Hintergrund ist es Aufgabe der Erfindung, ein Verfahren bereit zu stellen, mit dem Faser-Preforms herstellbar sind, deren lokale mechanische Eigenschaften über den Herstellprozess einstellbar sind.

Diese Aufgabe wird gemäß den Merkmalen des Anspruchs 1 gelöst. Das Verfahren zur Herstellung eines Faser-Preforms für ein Faserverbundbauteil gemäß Patentanspruch 1 sieht vor, dass über die gesamte Länge des zu erzeugenden Faser-Preforms mindestens eine erste Faserstruktur in einem Flechtprozess geflochten und über einen Teil der Länge des zu erzeugenden Faser-Preforms mindestens eine zweite Faserstruktur in einem Wickelprozess gewickelt wird. In einer günstigen Ausführung erfolgen dabei der Wickelprozess und der Flechtprozess gleichzeitig. Das Faser-Preform bildet die Grundlage für das zu fertigende Faserverbundbauteil, wobei die Weiterverarbeitung des Faser-Preforms beispielsweise im RTM-Verfahren erfolgt.

Die mechanischen Eigenschaften in Längsrichtung, d.h. entlang der 0°-Orientierung, wird durch die geflochtene Faserstruktur bestimmt, wobei an lokal spezifischen Bereichen die mechanischen Quereigenschaften durch die zweite, gewickelte Faserstruktur festlegbar ist. Das auf diese Weise hergestellte Bauteil kann somit verschiedene Anforderungen erfüllen. Die Kraftaufnahme und -übertragung in Längsrichtung entlang der 0°-Orientierung wird ergänzt durch lokal im Bereich der gewickelten Faserstruktur erhöhte Kraftaufnahmekapazitäten in Querrichtung, beispielsweise zur Erhöhung der Crash-Stabilität des Bauteils in Querrichtung. Um das Gewicht und die Kosten des Bauteils nicht übermäßig zu erhöhen, ist erfindungsgemäß vorgesehen, dass der Wickelprozess der zweiten Faserstruktur erst einsetzt, nachdem die erste Faserstruktur in dem Flechtprozess bereits über eine vorbestimmte Länge geflochten wurde, so dass nur der tatsächlich benötigte Bereich des zu fertigenden Faser-Preforms mit der gewickelten Faserstruktur versehen und nur in diesem Bereich die lokal erhöhten Kraftaufnahmekapazitäten in Querrichtung erzielt werden. Diese effiziente Ausnutzung des Fasermaterials beschränkt die materialbedingten Kosten und reduziert das Gewicht des zu fertigenden Faser-Preforms.

Erfindungsgemäß ist ferner vorgesehen, dass der Wickelprozess in den laufenden Flechtprozess eingefügt und aus dem laufenden Flechtprozess abgesetzt wird. Hierzu kann die Wickeleinheit an der Flechtmaschine integriert und so ausgelegt sein, dass die Fasern lokal auf dem zu fertigenden Faser-Preform an- bzw. abgesetzt werden können. Vorteilhafterweise weist die Fertigungsanlage hierfür spezielle Andrückrollen auf, mit denen die zu wickelnde Faserstruktur an das Faser-Preform angedrückt werden, bis die Faserreibung untereinander ausreicht, dass sich diese selbstständig fixieren. Zum Absetzen der gewickelten Faserstruktur werden die Fasern mit einem Schneidmesser getrennt und über die Andrückrollen an dem Faser-Preform befestigt. Hierfür ist in einer Ausführungsform der Erfindung vorgesehen, dass die Faserenden durch thermische Einwirkung und über eine Art Klebstoff (z. B. Sprühkleber, Klebebänder etc.) an dem zu fertigenden Bauteil fixiert werden. Beispielsweise können hierzu die Andrückrollen entsprechend aufgeheizt und mit einer Sprühklebevorrichtung ausgestattet sein. Die Befestigung erfolgt somit über eine Aktivierung von vorab in die Fasern eingebrachtem Binder. Ferner ist möglich, das sog.

Fiber-Placement-Verfahren anzuwenden.

Der Flechtprozess ist nicht auf eine Faserorientierung von 0° beschränkt, es ist auch möglich, Faserorientierungen von ±45° zu flechten, wobei zusätzlich der Wickelprozess mit noch größeren Winkeln integriert wird. Die Faserorientierung der gewickelten Fasern liegt in einem Bereich von ±30 bis ±80°, insbesondere ±45 bis ±80°. In einer hinsichtlich der Produktionsgeschwindigkeit günstigen Ausführung werden die geflochtenen Fasern für die 0°-Orientierung und die gewickelten Fasern für eine Faserorientierung von ±30 bis ±80° verwendet. Positive und negative Faserwinkel werden jeweils durch die Drehrichtung der Wicklung eingestellt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1:: Eine Draufsicht auf eine triaxiale Flechtstruktur gemäß dem Stand der Technik;
- Fig. 2: eine Schnittansicht eines Faser-Preforms mit geflochtener und gewickelter Faserstruktur in einer ersten Ausführungsform;
- Fig. 3: eine Schnittansicht eines Faser-Preforms mit geflochtener und gewickelter Faserstruktur in einer zweiten Ausführungsform;
- Fig. 4: eine Schnittansicht eines Faser-Preforms mit geflochtener und gewickelter Faserstruktur in einer dritten Ausführungsform;
- Fig. 5: eine Schnittansicht eines Faser-Preforms mit geflochtener und gewickelter Faserstruktur in einer vierten Ausführungsform;
- Fig. 6: eine Draufsicht auf ein erfindungsgemäßes Faser-Preform;
- Fig. 7: eine Anlage zur Durchführung des Verfahrens und Herstellung des Faser-Preforms; und
- Fig. 8: eine Seitenansicht der Anlage aus Fig. 7

Die Figuren sind beispielhaft schematisch. In allen Ansichten bezeichnen gleiche Bezugszeichen gleiche Bauteile.

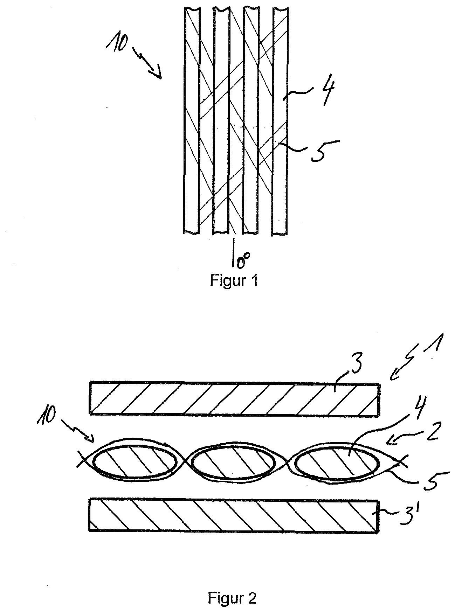

Fig. 1 zeigt die aus dem Stand der Technik bekannte triaxial geflochtene Faserstruktur 10 mit dicken Kohlenstofffasern 4 und dünnen Flechtfasern 5, wobei die Flechtfasern 5 in einem vorbestimmten Winkel um die Kohlenstofffasern 4 geflochten sind. Die Flechtfasern 5 dienen als Fixierung der Kohlenstofffasern 4.

In Fig. 2 ist eine Schnittansicht eines Faser-Preforms 1 in einem Bereich dargestellt, bei dem um die erste Faserstruktur 10 aus Fig. 1 eine zweite Faserstruktur 11, gebildet aus den gewickelten Fasern 3, 3', angeordnet ist. In der gezeigten Ausführung weisen die gewickelten Fasern 3 eine Orientierung von -45°, die gewickelten Fasern 3' eine Orientierung von +45° auf. Fig. 2 zeigt eine Art Sandwich-Bauweise mit einer triaxialen Faserstruktur 10 als Kern und diese umgebende gewickelte Fasern 3, 3'.

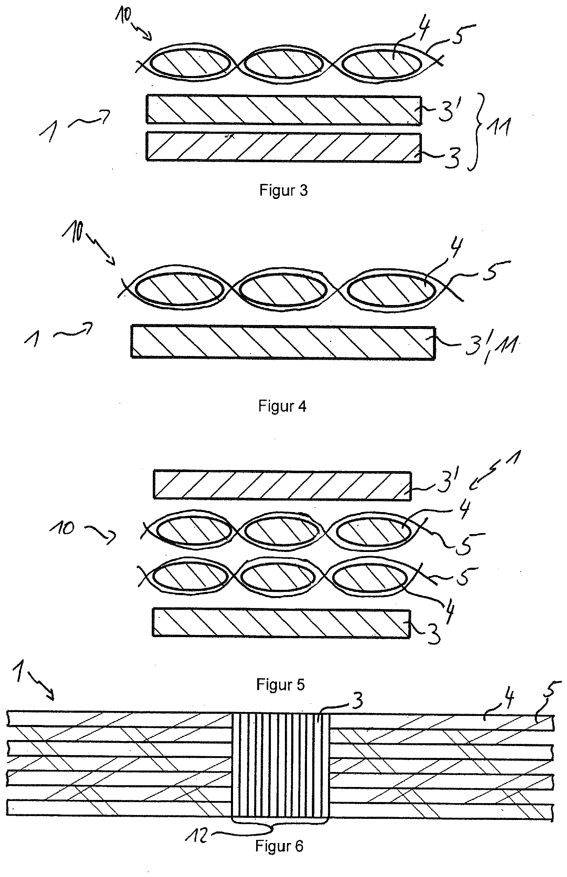

Die Fig. 3 bis 5 zeigen weitere mögliche Ausführungsformen, wobei in Fig. 3 das Faser-Preform 1 mit zwei gewickelten Faserstrukturen 3, 3' auf einer Seite der geflochtenen Faserstruktur 10 angeordnet sind. Dies ist erzielbar, indem das zu fertigende Faser-Preform 1 zunächst mit der geflochtenen Faserstruktur 10 und den gewickelten Fasern 3' gefertigt wird, wobei anschließend eine zusätzliche Faserlage durch die gewickelten Fasern 3 ergänzt wird. Die geflochtene Faserstruktur 10 bildet die 0°-Orientierung, die gewickelte Faserstruktur 11 weist Fasern 3', 3 von -80 und +80° auf.

Die Fig. 4 und 5 zeigen weitere alternative Ausführungsbeispiele zur Anordnung von geflochtenen Faserstrukturen 10 und gewickelten Faserstrukturen 11 in einer zwei- und vierlagigen Ausbildung. Die zu Fig. 2 und 3 beschriebenen Merkmale sind diesbezüglich entsprechend anwendbar.

In Fig. 6 ist eine Draufsicht auf ein fertiges Faser-Preform 1 gezeigt, bei dem sich die geflochtene Faserstruktur 10 über die gesamte Länge erstreckt und die zweite, gewickelte Faserstruktur 11 lokal begrenzt in einem Bereich 12 angeordnet ist, um die Querkraftaufnahmekapazität des Faser-Preforms 1 bzw. das hieraus zu fertigenden Faserverbundbauteils in diesem Bereich 12 zu erhöhen.

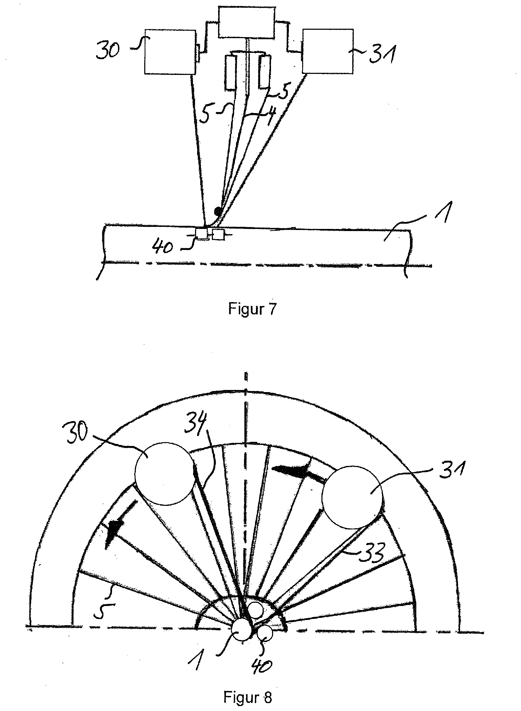

Die Fig. 7 und 8 zeigen eine Fertigungsanlage, mit der ein Faser-Preform 1 mit einer geflochtenen Faserstruktur 10 und einer lokal begrenzten gewickelten Faserstruktur 11, die gleichzeitig erzeugt werden, herstellbar ist. Das zu fertigende Faser-Preform 1 weist eine vorbestimmte Abzugsgeschwindigkeit auf, welche die Orientierung der geflochtenen Fasern und der gewickelten Fasern beeinflusst. Bei der gezeigten Anlage sind zwei Wickelsysteme 30 und 31 vorgesehen, um je eine gewickelte Faserstruktur mit positiver und negativer Orientierung zu erzeugen. Die geflochtenen Faserstrukturen aus Kohlenstofffasern 4 und Flechtfasern 5 erstrecken sich über die gesamte Länge des Faser-Preforms 1. In Fig. 7 ist der Teil des Verfahrens dargestellt, in dem zusätzlich die zweite, gewickelte Faserstruktur auf den Faser-Preform 1 aufgebracht wird. Über Andrückrollen 40 werden die Fasern aus dem ersten und zweiten Wickelsystem 30, 31 beim Einsetzen an das Faser-Preform 1 angedrückt, bis die Fasern eine ausreichende selbstständige Haftung an dem Bauteil aufweisen. Über die Andrückrollen 40 oder ein weiteres nicht dargestelltes System wird thermisch auf die zu wickelnden Fasern eingewirkt, um eine zusätzliche Fixierung an dem Faser-Preform 1 zu gewährleisten. Dies gilt sowohl bei dem Einsetzen als auch bei dem späteren Absetzen bzw. Abschneiden der gewickelten Faserstruktur. Parallel zu dem Flechtprozess der ersten, aus Kohlenstofffasern 4 und Flechtfasern 5 gebildeten Faserstruktur 10 werden von den Wickelsystemen 30, 31 Fasern 33, 34 um das zu fertigende Faser-Preform 1 gewickelt, wobei die Faserorientierung der gewickelten Fasern über die Rotationsgeschwindigkeit der Wickelsysteme 30, 31, die vorzugweise als Spulen ausgebildet sind, bestimmt wird. Je größer die Winkel der Faserorientierung sein sollen, desto schneller müssen die Wickelsysteme 30, 31 um das Faser-Preform herumgeführt werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können unterschiedliche Faserarten, wie Kohlenstofffasern, Aramidfasern oder Glasfasern kombiniert werden. Zusätzlich können die Fasern vorab bereits mit einem Binder versehen oder imprägniert sein. Auch sind Flechtungen von bebinderten Tows als Material mit umfasst.

## Patentansprüche

1. Verfahren zur Herstellung eines Faser-Preforms (1) für ein Faserverbundbauteil, wobei über die gesamte Länge des zu erzeugenden Faser-Preforms (1) mindestens eine erste Faserstruktur (10) in einem Flechtprozess geflochten und über einen Teil der Länge des zu erzeugenden Faser-Preforms (1) mindestens eine zweite Faserstruktur (11) in einem Wickelprozess gewickelt wird **dadurch gekennzeichnet, dass**
der Wickelprozess in den laufenden Flechtprozess eingefügt und aus dem laufenden Flechtprozess abgesetzt wird,
die Fasern der zweiten, gewickelten Faserstruktur (11) zum Absetzen der zweiten, gewickelten Faserstruktur (11) mit einem Schneidmesser getrennt werden und
die zweite, gewickelte Faserstruktur (11) zumindest zeitweise über Andrückrollen (40) an das Faser-Preform (1) gedrückt wird, wobei
Faserenden der Fasern der zweiten, gewickelten Faserstruktur (11) mit Klebstoff versehen werden und
die Andrückrollen (40) heizbar sind und die mit Klebstoff versehenen Faserenden durch die Andrückrollen (40) thermisch aktiviert und fixiert werden.

2. Verfahren nach Anspruch 1, **dadurch gekennzeichnet, dass** der Wickelprozess und der Flechtprozess gleichzeitig erfolgen, wobei der Wickelprozess einsetzt, nachdem die erste Faserstruktur (10) in dem Flechtprozess bereits über eine vorbestimmte Länge geflochten wurde.

3. Verfahren nach zumindest einem der vorigen Ansprüche, **dadurch gekennzeichnet, dass** der Flechtprozess eine Faserorientierung von 0° erzeugt oder eine Faserorientierung von ±45° erzeugt.

4. Verfahren nach zumindest einem der vorigen Ansprüche, **dadurch gekennzeichnet, dass** der Wickelprozess eine Faserorientierung von ±30 bis ± 80°erzeugt.

5. Verfahren nach zumindest einem der vorigen Ansprüche, **dadurch gekennzeichnet, dass** Fasern (4, 5) der ersten Faserstruktur (10) vorimprägniert oder bebindert sind.

## Claims

1. A method for producing a fibre preform (1) for a fibre composite component, wherein at least a first fibre structure (10) is braided in a braiding process over the entire length of the fibre preform (1) which is to be produced, and at least a second fibre structure (11) is wound in a winding process over part of the length of the fibre preform (1) which is to be produced, **characterised in that**
the winding process is integrated into the ongoing braiding process and discontinued from the ongoing braiding process,
the fibres of the second, wound, fibre structure (11) to deposit the second, wound, fibre structure (11) are severed with a cutting knife, and
the second, wound, fibre structure (11) at least at times is pressed against the fibre preform (1) by way of pressure rolls (40), wherein
fibre ends of the fibres of the second, wound, fibre structure (11) are provided with adhesive, and
the pressure rolls (40) are heatable and the fibre ends which are provided with adhesive are thermally activated and fixed by the pressure rolls (40).

2. A method according to Claim 1, **characterised in that** the winding process and the braiding process take place simultaneously, the winding process starting once the first fibre structure (10) has already been braided over a predetermined length in the braiding process.

3. A method according to at least one of the preceding claims, **characterised in that** the braiding process produces a fibre orientation of 0° or a fibre orientation of ±45°.

4. A method according to at least one of the preceding claims, **characterised in that** the winding process produces a fibre orientation of ±30 to ± 80°.

5. A method according to at least one of the preceding claims, **characterised in that** fibres (4, 5) of the first fibre structure (10) are preimpregnated or provided with binder.

## Revendications

1. Procédé d'obtention d'une préforme fibreuse (1) destinée à un élément composite renforcé par des fibres, selon lequel sur la totalité de la longueur de la préforme fibreuse (1) en cours de formation, au moins une première structure fibreuse (10) est tressée selon un procédé de tressage et, sur une partie de la préforme fibreuse (1) en cours de formation au moins une seconde structure fibreuse (11) est enroulée selon un procédé d'enroulement,
**caractérisé en ce que**
le procédé d'enroulement est inséré au cours du procédé de tressage, et arrêté au cours du procédé de tressage,
pour arrêter la seconde structure fibreuse enroulée (11) les fibres de cette seconde structure fibreuse enroulées (11) sont séparées avec une lame de coupe,
la seconde structure fibreuse enroulée (11) est comprimée au moins par intermittence sur la préforme fibreuse (1) par l'intermédiaire de galets presseurs (40),
les extrémités des fibres de la seconde structure fibreuse enroulée (11) sont équipées d'adhésif, et
les galets presseurs (40) peuvent être chauffés et les extrémités des fibres équipées d'adhésif sont activées thermiquement par les galets presseurs (40) et fixées.

2. Procédé conforme à la revendication 1,
**caractérisé en ce que**
le procédé d'enroulement et le procédé de tressage sont mis en oeuvre simultanément et le procédé d'enroulement est mis en oeuvre après que la première structure fibreuse (10) ait déjà été tressée, lors du procédé de tressage sur une longueur prédéfinie.

3. Procédé conforme à au moins l'une des revendications précédentes,
**caractérisé en ce que**
le procédé de tressage permet d'obtenir une orientation des fibres de 0° ou une orientation des fibres de ±45°.

4. Procédé conforme à au moins l'une des revendications précédentes,
**caractérisé en ce que**
le procédé d'enroulement permet d'obtenir une orientation des fibres de ±30° à ±80°.

5. Procédé conforme à au moins l'une des revendications précédentes,
**caractérisé en ce que**
des fibres (4, 5) de la première structure fibreuse (10) sont préimprégnées ou liées.
